# EUROPÄISCHE PATENTSCHRIFT

(11) **EP 1 098 472 B1**
(45) Veröffentlichungstag und Bekanntmachung des Hinweises auf die Patenterteilung: **11.05.2005**
(21) Anmeldenummer: 00123821.1
(22) Anmeldetag: 02.11.2000
(51) Int. Cl.: H04L 9/32

(54) **Chip für die Speicherung eines Secret Keys zur Verwendung in einer Nutzungsberechtigungskontrolleinrichtung**
Chip for storing a secret key for use in a user authorization control system
Circuit intégré pour stocker une clé secrète à utiliser dans un système de contrôle d'autorisation d'utilisateur

(30) Priorität: 03.11.1999 DE 19952841
(43) Veröffentlichungstag der Anmeldung: 09.05.2001
(73) Patentinhaber: TeraTron GmbH, 51647 Gummersbach (DE)
(72) Erfinder: Weiss, Bernd, 51647 Gummersbach (DE); Konrad, Reimund, 51647 Gummersbach (DE); Petsching, Wilfried, 51702 Bergneustadt (DE)
(74) Vertreter: COHAUSZ & FLORACK

(56) Entgegenhaltungen:
- EP-A- 0 835 790
- EP-A- 0 870 889
- WO-A-98/34818
- DE-A- 19 652 256
- GB-A- 2 296 804
- US-A- 5 742 236

## Beschreibung

Die Erfindung betrifft eine Auswerteeinheit einer Nutzungsberechtigungskontrolleinrichtung zum Vergleichen einer intern erzeugten verschlüsselten Nachricht mit einer von einer Schlüsseleinrichtung erhaltenen verschlüsselten Nachricht, sowie eine Funktionssteuereinrichtung einer solchen Nutzungsberechtigungskontrolleinrichtung. Die Erfindung betrifft ebenfalls eine Wegfahrsperre eines Kraftfahrzeugs, die benutzerseitig eine Schlüsseleinrichtung und fahrzeugseitig eine Antenne, einer Auswerteeinheit und einer Antriebssteuereinheit aufweist, wobei die Schlüsseleinrichtung über eine Kommunikation über die Antenne durch die Auswerteeinheit authentifizierbar ist und die Antriebssteuereinheit von der Auswerteeinheit benachrichtigt wird, daß antriebsrelevante Funktionen freigegeben werden können.

Die Kontrolle einer Nutzungsberechtigung von Funktionen einer Einrichtung durch Benutzer oder Gegenstände erfolgt heutzutage häufig über eine automatische Authentifizierung, zu der zwischen einer benutzerseitigen Schlüsseleinrichtung und einer einrichtungsseitigen Auswerte- und Freigabeeinrichtung verschlüsselten Nachrichten, die auf einem "Secret Key" basieren, übertragen werden. Ein Secret Key ist dabei ein geheimer Wert, der sowohl in der Schlüssel- als auch in der Auswerte- und Freigabeeinrichtung gespeichert ist und der selber nie übertragen wird. Die Schlüsseleinrichtung und die Auswerte- und Freigabeeinrichtung stellen zusammen die eingangs genannte Nutzungsberechtigungskontrolleinrichtung dar.

In einem Kraftfahrzeug kann beispielsweise eine Wegfahrsperre zur Kontrolle der Antriebsfunktionen eine solche Nutzungsberechtigungskontrolleinrichtung darstellen. Die Auswerte- und Freigabeeinrichtung ist dann in dem Fahrzeug integriert, während die Schlüsseleinrichtung von dem Benutzer mitgeführt wird.

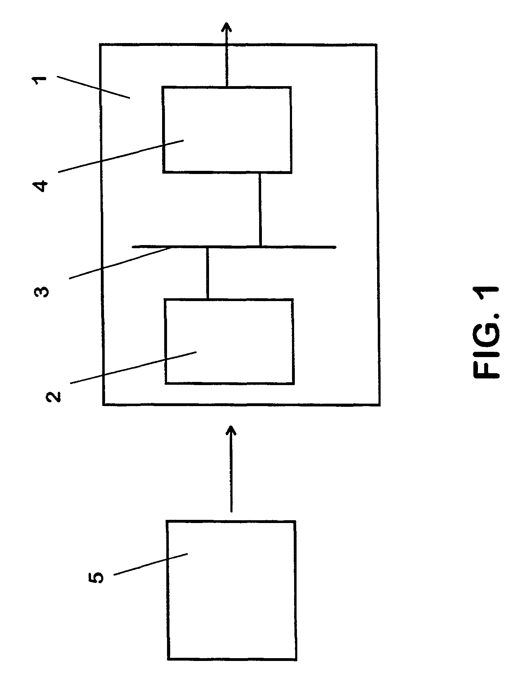

Die Elemente einer entsprechenden Wegfahrsperre sind zur Veranschaulichung schematisch in Figur 1 dargestellt.

Die fahrzeugseitige Auswerte- und Freigabeeinrichtung 1 weist eine (nicht dargestellte) Antenne und eine damit verbundene Auswerteeinheit 2, einen Bus 3 und eine Antriebssteuereinheit 4, z.B. eine Motormanagementeinheit, auf. Die Auswerteeinheit 2 kann ein eigenständiges Steuergerät darstellen oder in eine andere funktionale Gruppe, wie Anzeigeinstrumente oder Bordcomputer, integriert sein. Über den Bus 3 hat sie Zugang zu der Antriebssteuereinheit 4. Die Schlüsseleinrichtung 5 weist einen Crypt-Transponder auf, der die für Verschlüsselungen notwendige Energie induktiv über die Auswerteeinheit 2 erhält. In der Schlüsseleinrichtung 5, der Auswerteeinheit 2 und der Antriebssteuereinheit 4 ist jeweils ein Secret Key und ein Verschlüsselungsalgorithmus gespeichert.

Wird von einem Benutzer die Freigabe des Antriebs gewünscht, so authentifiziert zunächst die Auswerteeinheit 2 die von dem Benutzer mitgeführte Schlüsseleinheit 5 mittels einer von der Schlüsseleinheit 5 erhaltenen verschlüsselten Nachricht. Anschließend schaltet die Auswerteeinheit 2 über den Bus 3 die Antriebssteuereinheit 4 mittels einer weiteren verschlüsselten Nachricht frei. Über diese weitere verschlüsselte Nachricht erfolgt gleichzeitig mit der Freigabe der Funktionen auch eine Authentifizierung der Auswerteeinheit 2 gegenüber der Antriebssteuereinheit 4, d.h. auch die Auswerteeinheit 2 muß ihre Berechtigung für die Freischaltung nachweisen. Die Verschlüsselung der Nachrichten wird basierend auf den in den jeweiligen Einrichtungen 2, 4, 5 gespeicherten Secret Keys durch den ebenfalls jeweils vorhandenen Verschlüsselungsalgorithmus erzeugt. Die Authentifizierung kann sowohl zwischen Schlüsseleinrichtung 5 und Auswerteeinheit 2 als auch zwischen Auswerteeinheit 2 und Antriebssteuereinheit 4 einseitig oder zweiseitig erfolgen.

Der Verschlüsselungsalgorithmus ist üblicherweise als Software ausgebildet und in einem Microcontroller der Auswerteeinheit 2 bzw. der Antriebssteuereinheit 4 enthalten. Häufig wird außerdem der im Mikrocontroller enthaltene, nichtflüchtige Speicher zur Speicherung des Secret Keys benutzt. In komplexen Systemarchitekturen weist der Mikrocontroller jedoch oft keinen nichtflüchtigen Speicher auf. In diesem Fall wird der Secret Key in einem externen, nichtflüchtigen Speicher abgelegt. Das bedeutet aber, daß zum einen der nichtflüchtige Speicher leichter ausgetauscht werden kann und daß zum anderen der Secret Key aus dem externen nichtflüchtigen Speicher ausgelesen werden können muß, um ihn der Software mit dem Verschlüsselungsalgorithmus in dem Mikrocontroller zur Verfügung zu stellen. Es sind Fälle bekannt, bei denen die Informationen solcher nichtflüchtigen Speicher ausgelesen und in eine neue Auswerte- oder Antriebssteuereinheit 2, 4 eingespeichert wurden, um den Diebstahl eines Fahrzeuges vorzubereiten und durchzuführen.

Die Druckschrift WO 98/34818 A1 beschreibt ein Diebstahlschutzsystem für ein Kraftfahrzeug, bei dem nur ein Codesignalgeber und Auswertemittel einer fahrzeugseitigen Sende- und Empfangseinheit jeweils einen Speicher mit einem Geheimcode und eine Verschlüsselungseinheit, die auf den Speicher zugreift, aufweisen. Die Freigabe von Funktionen erfolgt dann über ein Freigabesignal von den Auswertmitteln an ein Sicherheitsaggregat. In der Druckschrift wird außerdem vorgeschlagen, die Verschlüsselungseinheit in dem Codesignalgeber bzw. in den Auswertmitteln entweder hardwaremäßig als festverdrahtete, rückgekoppelte Schieberegister, als Mikroprozessoren oder als Kryptoprozessoren auszubilden. Für den Codesignalgeber wird ferner vorgeschlagen, den Speicher mit dem Geheimcode und die Verschlüsselungseinheit zusammen mit anderen Komponenten auf einem Halbleiterchip auszubilden, um sehr kleine mechanische Abmessungen des Codesignalgebers zu erreichen.

Der Erfindung liegt die Aufgabe zugrunde, die durch eine Nutzungsberechtigungskontrolleinrichtung gewährte Sicherheit weiter zu erhöhen.

Diese Aufgabe wird erfindungsgemäß gelöst durch eine Auswerteeinheit einer Nutzungsberechtigungskontrolleinrichtung zum Vergleichen einer intern erzeugten verschlüsselten Nachricht mit einer von einer Schlüsseleinrichtung erhaltenen verschlüsselten Nachricht, die ferner geeignet ist zum Erzeugen und Abgeben einer weiteren verschlüsselten Nachricht an eine Funktionssteuereinrichtung. Die Funktionssteuereinrichtung steuert dabei zu schützenden Funktionen, beispielsweise die Antriebsfunktionen eines Kraftfahrzeugs. Die Auswerteeinheit umfaßt außerdem einen Chip für die Speicherung eines Secret Keys zur Verwendung durch einen Verschlüsselungsalgorithmus zum Erzeugen einer verschlüsselten Nachricht, wobei der Chip einen nichtflüchtigen Speicher umfaßt, der mindestens einen Teilbereich aufweist, in dem ein Secret Key gespeichert ist, sowie einen mindestens einen Verschlüsselungsalgorithmus realisierenden Hardwarebereich mit Zugriff zu dem mindestens einen Teilbereich des nichtflüchtigen Speichers mit einem Secret Key.

Alternativ oder zusätzlich wird die Aufgabe erfindungsgemäß ebenso gelöst durch eine Funktionssteuereinrichtung einer Nutzungsberechtigungskontrolleinrichtung, die geeignet ist zum Vergleichen einer intern erzeugten verschlüsselten Nachricht mit einer von einer Auswerteeinheit der Nutzungsberechtigungskontrolleinrichtung erhaltenen verschlüsselten Nachricht und zum Freigeben mindestens einer durch die Nutzungsberechtigungskontrolleinrichtung geschützten Funktion bei übereinstimmenden Nachrichten. Die Funktionssteuereinrichtung umfaßt dabei einen Chip, der dem für die Auswerteeinheit vorgeschlagenen Chip entspricht.

Schließlich wird die Aufgabe erfindungsgemäß gelöst durch eine Wegfahrsperre eines Kraftfahrzeugs, die benutzerseitig eine Schlüsseleinrichtung und fahrzeugseitig eine Antenne, einer Auswerteeinheit und einer Antriebssteuereinheit aufweist, wobei die Schlüsseleinrichtung über eine Kommunikation über die Antenne durch die Auswerteeinheit authentifizierbar ist und die Antriebssteuereinheit von der Auswerteeinheit benachrichtigt wird, daß antriebsrelevante Funktionen freigegeben werden können, und wobei die Auswerteeinheit einen Chip umfaßt, der dem Chip der erfindungsgemäßen Auswerteeinheit entspricht.

Erfindungsgemäß ist der Verschlüsselungsalgorithmus also als Hardware implementiert und außerdem auf dem gleichen Chip integriert wie ein nicht flüchtiger Speicher, der den Secret Key beinhaltet. Im Gegensatz zum Stand der Technik wird der Secret Key somit nicht über einen Ausgang nach außen zugänglich gemacht, um ihn dem Verschlüsselungsalgorithmus zur Verfügung zu stellen. Dadurch wird der Zugang zu dem Secret Key effektiver vor unbefugten Zugriffen geschützt.

Hinzu kommt, daß die Hardwareverdrahtung auf einem Chip üblicherweise durch Passivierung geschützt sind. Da der Verlauf der Verdrahtung von außen auch nicht unmittelbar ersichtlich ist, ist ein Auslesen des Secret Keys besonders erschwert.

Die verwendeten Begriffe verschlüsselt und Verschlüsselungsalgorithmus sind weit zu verstehen und beziehen sich auf jegliche Umwandlung einer Nachricht, die auf einem Algorithmus und einem Secret Key basiert. So fällt hierunter erfindungsgemäß auch entschlüsselt bzw. ein Entschlüsselungsalgorithmus. Eine kopiersichere Entschlüsselung kann z.B. von Relevanz sein, wenn für eine Nutzungsberechtigungskontrolle eine verschlüsselt übertragene Nachricht unverschlüsselt mit einer vorhandenen Nachricht verglichen werden soll.

Bevorzugte Ausgestaltungen der Erfindung gehen aus den Unteransprüchen hervor.

Vorzugsweise ist der Bereich des nichtflüchtigen Speichers, in dem der Secret Key abgelegt ist, nicht auslesbar. Ein Zugriff auf einen nicht lesbarer Bereich eines nichtflüchtigen Speichers kann nur mit erheblichem Aufwand erlangt werden. Die Sicherheit vor einem unbefugten Zugriff auf den Secret Key von außen wird somit auf diese Weise noch weiter erhöht.

In einer weiter bevorzugten Ausgestaltung des erfindungsgemäß vorgesehenen Chips ist der nichtflüchtige Speicher ein EEPROM, ein Flash-RAM oder ein FRAM.

Der Inhalt des Bereichs des nichtflüchtigen Speichers mit gespeichertem Secret Key kann entweder änderbar oder nicht änderbar sein. Wenn er nicht änderbar ist, so wird er lediglich einmal während der Produktion programmiert. Wenn er änderbar ist, so kann ein Paßwort vorgesehen sein, mit dem der Secret Key gegen ein unbefugtes Überschreiben geschützt wird.

Weitere Teilbereich des nichtflüchtigen Speichers können zum Ablegen weiterer Daten verwendet werden, insbesondere für weitere Daten, die ebenfalls von dem Verschlüsselungsalgorithmus eingesetzt werden. Ein Beispiel für solche Daten ist ein Zählerzustand, der verschlüsselt wird. Dabei kann beispielsweise auch ein Inkrementieren oder Dekrementieren des Zählerzustands nur um jeweils eins möglich zugelassen sein.

Der erfindungsgemäß vorgesehene Chip kann in allen Einrichtungen eingesetzt werden, die ein Verschlüsseln mit einer Verschlüsselungsfunktion basierend auf einem Secret Key vorsehen und bei denen ein unberechtigter Zugang zu dem Secret Key befürchtet werden muß.

Die Erfindung wird im folgenden anhand eines Ausführungsbeispiels unter Bezugnahme auf Zeichnungen näher erläutert. Dabei zeigt:
- Fig. 1:: schematisch die Elemente einer Wegfahrsperre eines Kraftfahrzeugs,
- Fig. 2:: schematisch die Funktionsweise eines erfindungsgemäßen Chips und
- Fig. 3:: schematisch den Aufbau eines Chips gemäß Erfindung.

Figur 1 wurde bereits in der Einleitung beschrieben. Die dargestellte Wegfahrsperre eines Kraftfahrzeugs liegt auch den weiteren Ausführungen zugrunde.

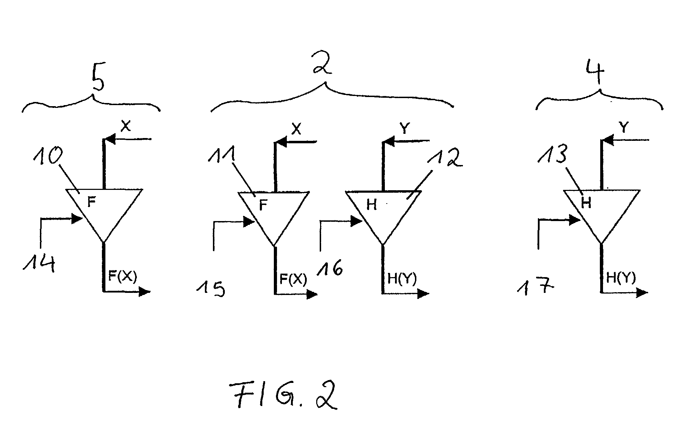

Figur 2 illustriert die verschiedenen, für die Wegfahrsperre aus Figur 1 durchgeführten Verschlüsselungen, wobei die eingesetzten Verschlüsselungsalgorithmen durch Dreiecke 10-13 symbolisiert sind.

Auf der linken Seite von Figur 2 ist die Verschlüsselung in der Schlüsseleinrichtung 5 und in der Mitte und auf der rechten Seite die Verschlüsselung in dem Kraftfahrzeug dargestellt. Fahrzeugseitig ist dabei weiter unterschieden zwischen zwei verschiedenen Verschlüsselungen in der Auswerteeinheit 2 und einer Verschlüsselung in der Antriebssteuereinheit 4. Für jede Verschlüsselung wird ein eigener Verschlüsselungsalgorithmus 10-13 eingesetzt, wobei aber die beiden Verschlüsselungen in der Auswerteeinheit 2 auch mit dem gleichen Verschlüsselungsalgorithmus durchgeführt werden können. Die Verschlüsselung wird außerdem nur für eine einseitige Authentifizierung der Schlüsseleinrichtung 5 gegenüber der Auswerteeinheit 2 und der Auswerteeinheit 2 gegenüber der Antriebssteuereinheit 4 beschrieben. Genauso ist aber auch eine jeweils gegenseitige Authentifizierung möglich.

Jeder der Verschlüsselungsalgorithmen 10-13 erhält als Eingang einen Secret Key 14-17 und einen weiteren Wert X, Y, der verschlüsselt werden soll. Erfindungsgemäß sind dabei die Verschlüsselungsalgorithmen 10-13 hardwaremäßig ausgebildet und auf dem gleichen Chip wie ein nichtflüchtiger Speicher mit dem jeweilig zugeführten, nicht lesbaren Secret Key 14-17 integriert. Als Ausgang liefern die Verschlüsselungsalgorithmen 10-13 eine verschlüsselte Nachricht F(X), H(Y), die eine Funktion von dem jeweiligen eingegebenen Wert X, Y sind und außerdem auf dem jeweiligen Secret Key 14-17 basieren.

Der Verschlüsselungsalgorithmus 10 in der Schlüsseleinheit 5 erhält nun zunächst als eingegebenen Wert X eine Zufallsvariable von der Auswerteeinheit 2. Alternativ können auch andere Werte X eingegeben werden, wie ein Zählerstand eines integrierten Zählers, der in Schlüsseleinrichtung 5 und Auswerteeinrichtung 2 gleich variiert wird, so daß keine Übermittlung von der Auswerteeinheit 2 zu der Schlüsseleinrichtung 5 vorausgehen muß. Die Zufallsvariable X wird von dem Verschlüsselungsalgorithmus 10 basierend auf dem in der Schlüsseleinrichtung 5 gespeicherten Secret Key 14 verschlüsselt und an die Auswerteeinheit 2 zurückgesandt.

Die Auswerteeinheit 2 liefert die gleiche Zufallsvariable X, die sie an die Schlüsseleinrichtung 5 gesandt hatte, auch an ihren ersten eigenen Verschlüsselungsalgorithmus 11. Dieser verschlüsselt die Zufallszahl X seinerseits unter Berücksichtigung des ersten in der Auswerteeinheit 2 gespeicherten Secret Keys 15.

Stimmt der von der Schlüsseleinrichtung 5 zurück erhaltene, verschlüsselte Wert F(X) mit dem in der Auswerteeinrichtung 2 generierten, verschlüsselten Wert F(X) überein, so verschlüsselt die Auswerteeinheit 2 eine andere, von der Antriebssteuereinheit 4 erhaltenen Zufallszahl Y mittels des zweiten Verschlüsselungsalgorithmus 12 und basierend auf dem zweiten gespeicherten Secret Key 16. Diese zweite verschlüsselte Zufallszahl H(Y) sendet die Auswerteeinheit 2 dann an die Antriebssteuereinheit 4.

Auch in der Antriebssteuereinheit 4 wird die an die Auswerteeinheit 2 gesendete Zufallszahl Y basierend auf dem dort gespeicherten Secret Key 17 mittels des eigenen Verschlüsselungsalgorithmus 13 verschlüsselt. Stimmen nun der in der Antriebssteuereinheit 4 verschlüsselte Wert H(Y) und der von der Auswerteeinheit 2 erhaltene, verschlüsselte Wert H(Y) überein, so werden die Antriebsfunktionen freigegeben. Der Benutzer kann das Fahrzeug also nun in Betrieb nehmen.

Die hier beschriebene Freigabe einer Nutzung erfolgte lediglich beispielhaft zur Veranschaulichung. Sie kann auch auf jede beliebige andere Weise erfolgen, solange sie auf verschlüsselten Nachrichten beruht, die mittels eines Secret Keys gebildet werden.

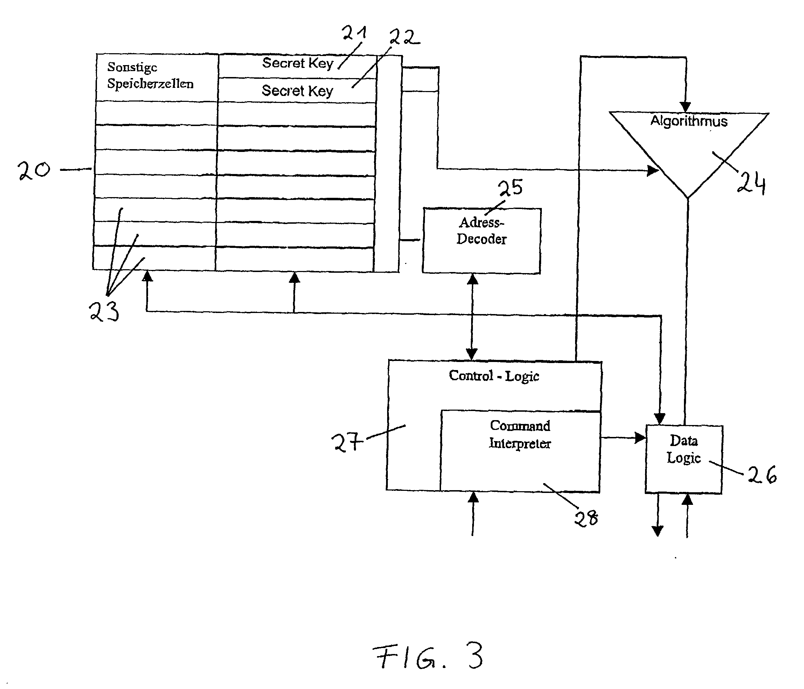

Figur 3 stellt den Aufbau eines erfindungsgemäßen Chips dar, der in der Auswerteeinheit 2 aus Figur 1 mit einem Verschlüsselungsverfahren ähnlich dem zu Figur 2 beschriebenen eingesetzt wird.

Ein als EEPROM ausgebildeter, nichtflüchtiger Speicher 20 umfaßt mehrere Speicherzellen 21, 22, 23. Zwei der Speicherzellen 21, 22 sind nicht lesbar und jeweils mit einem Secret Key belegt. Die weiteren Speicherzellen 23 sind lesbar und mit weiteren Daten beschrieben.

Ein Hardwarebereich, der einen Verschlüsselungsalgorithmus 24 bildet, hat unmittelbaren Zugriff auf den nicht lesbaren Teilbereich 21, 22 des nichtflüchtigen Speichers 20. Als weitere Hardwarebereiche hat ferner ein Adressen-Decodierer 25 Lesezugriff und eine Datenlogik 26 Lese- und Schreibzugang zu den lesbaren Speicherzellen 23. Der Adressen-Decodierer 25 ist außerdem mit einer Steuerlogik 27 verbunden. Auch die Steuerlogik 27 wird durch einen Hardwarebereich des erfindungsgemäßen Chips gebildet. Die Steuerlogik 27 weist einen Bereich zur Befehlsinterpretation 28 auf, in den von außen Befehle eingegeben werden können. Ausgänge der Steuerlogik 27 sind dem Verschlüsselungsalgorithmus 24 und der Datenlogik 26 zugeführt. Die Datenlogik 26 weist eine Schnittstelle nach außen auf, über die Daten ein- und ausgegeben werden können.

Die Funktionsweise des dargestellten Chips ist die folgende:

Über den Bereich zur Befehlsinterpretation 28 der Steuerlogik 27 wird ein Befehl zum Generieren einer verschlüsselten Nachricht eingegeben. Der Befehl beinhaltet dabei auch, ob es sich um eine Nachricht für die Authentifizierung der Schlüsseleinrichtung 5 und/oder für eine Authentifizierung der Auswerteeinheit gegenüber der Antriebssteuereinrichtung 4 handeln soll. Die Steuerlogik 27 liest daraufhin über den Adressen-Decodierer 25 für die Verschlüsselung relevante Daten aus den entsprechenden, auslesbaren Zellen 23 des nichtflüchtigen Speichers 20 aus und leitet diese zusammen mit einem Verschlüsselungsbefehl an den Verschlüsselungsalgorithmus 24 weiter. Die für die Verschlüsselung relevante Daten können beispielsweise aus einem Zählerzustand bestehen, der über die Datenlogik 26 in entsprechenden Speicherzellen 23 vor oder nach jeder Verschlüsselung neu gesetzt, insbesondere inkrementiert oder dekrementiert, werden kann. Ebenso können über die Datenlogik 26 Zufallszahlen, die an die Schlüsseleinheit 5 gesandt oder von der Antriebssteuereinheit 4 erhalten wurden, in lesbare Bereiche 23 des nichtflüchtigen Speichers 20 geschrieben und über Adressen-Decodierer 25 und Steuerlogik 27 an den Verschlüsselungsalgorithmus 24 weitergegeben werden.

Entsprechend dem von der Steuerlogik 27 erhaltenen Befehl erzeugt der Verschlüsselungsalgorithmus 24 auf Grundlage der Secret Keys 15, 16 und der weiteren zugeführten Daten X, Y eine verschlüsselte Nachricht F(X), H(Y) für die Schlüsseleinrichtung 5 und/oder für die Antriebssteuereinrichtung 4. Da hier im Gegensatz zu Figur 2 nur ein Verschlüsselungsalgorithmus 24 für beide Verschlüsselungen eingesetzt wird, sind dabei die der Verschlüsselung zugrunde liegende Funktionen F und H identisch. Über die Datenlogik 26 werden die verschlüsselten Nachrichten F(X), H(Y) ausgegeben. Eine Nachricht für die Schlüsseleinrichtung 5 kann dann beispielsweise in einem Mikrocontroller der Auswerteeinheit 2 mit einer von der Schlüsseleinrichtung 5 empfangenen, verschlüsselten Nachricht F(X) verglichen werden und im Falle einer Übereinstimmung kann eine Nachricht H(Y) zur Authentifizierung gegenüber der Antriebssteuereinrichtung 4 an diese zur Freischaltung der Antriebsfunktionen übermittelt werden.

Über die Datenlogik 26 sind auch weitere Daten in den lesbaren Bereich 23 des nichtflüchtigen Speichers 20 schreibbar oder aus diesem lesbar. Das Schreiben kann dabei mit üblichen Adressierungsmethoden erfolgen. Auch eine Neuschreiben der Secret Keys 15, 16 ist möglich, nachdem ein Paßwort eingegeben wurde. Die Befehle zu einer Änderung der Speicherinhalte erhält die Datenlogik 26 über den Bereich zur Befehlsinterpretation 28 der Steuerlogik 27, dem entsprechende Befehle von außen vorgegeben werden. Die erforderlichen Daten werden der Datenlogik 26 direkt von außen zugeführt.

Insgesamt ist sichergestellt, daß der erfindungsgemäße Chip nur zusammen mit den zum Fahrzeug gehörenden Schlüsseleinrichtungen genutzt werden kann. Denn ein ausgetauschter Chip müßte zur Freigabe der Antriebsfunktionen nicht nur den Verschlüsselungsalgorithmus, sondern zumindest auch den Secret Key für die verschlüsselten Nachrichten zu der Antriebssteuereinheit aufweisen. Ein Zugriff auf die Secret Keys ist aber mit dem erfindungsgemäßen Chip erheblich erschwert.

## Patentansprüche

1. Auswerteeinheit (2) einer Nutzungsberechtigungskontrolleinrichtung zum Vergleichen einer intern erzeugten verschlüsselten Nachricht (F(X)) mit einer von einer Schlüsseleinrichtung (5) erhaltenen verschlüsselten Nachricht (F(X)),
**dadurch gekennzeichnet,**
**daß** die Auswerteeinheit (2) ferner geeignet ist zum Erzeugen und Abgeben einer weiteren verschlüsselten Nachricht (H(Y)) an eine Funktionssteuereinrichtung (4) und daß die Auswerteeinheit (2) einen Chip umfaßt für die Speicherung eines Secret Keys (15, 16) zur Verwendung durch einen Verschlüsselungsalgorithmus (11, 12, 24) zum Erzeugen einer verschlüsselten Nachricht, wobei der Chip einen nichtflüchtigen Speicher (20) umfaßt, der mindestens einen Teilbereich (21, 22) aufweist, in dem ein Secret Key (15, 16) gespeichert ist, sowie einen mindestens einen Verschlüsselungsalgorithmus (24) realisierenden Hardwarebereich mit Zugriff zu dem mindestens einen Teilbereich (21, 22) des nichtflüchtigen Speichers (20) mit einem Secret Key (15, 16).

2. Auswerteeinheit (2) nach Anspruch 1,
**dadurch gekennzeichnet,**
**daß** der mindestens eine Teilbereich (21, 22) des nichtflüchtigen Speichers (20), in dem ein Secret Key (15, 16) gespeichert ist, nicht lesbar ist.

3. Auswerteeinheit (2) nach Anspruch 1 oder 2,
**dadurch gekennzeichnet,**
**daß** der nichtflüchtige Speicher (20) ein EEPROM, ein Flash-RAM oder ein FRAM ist.

4. Auswerteeinheit (2) nach einem der Ansprüche 1 bis 3,
**dadurch gekennzeichnet,**
**daß** der Inhalt des mindestens einen Teilbereichs (21, 22) des nichtflüchtigen Speichers (20), in dem ein Secret Key (15, 16) gespeichert ist, nicht änderbar ist.

5. Auswerteeinheit (2) nach einem der Ansprüche 1 bis 3,
**dadurch gekennzeichnet,**
**daß** der Inhalt des mindestens einen Teilbereichs (21, 22) des nichtflüchtigen Speichers (20), in dem ein Secret Key (15, 16) gespeichert ist, erneut beschreibbar ist.

6. Auswerteeinheit (2) nach Anspruch 5,
**dadurch gekennzeichnet,**
**daß** der Inhalt des mindestens einen Teilbereichs (21, 22) des nichtflüchtigen Speichers (20), in dem ein Secret Key (15, 16) gespeichert ist, mit einem Paßwort gegen ein erneutes Überschreiben geschützt ist.

7. Auswerteeinheit (2) nach einem der voranstehenden Ansprüche,
**dadurch gekennzeichnet,**
**daß** in einem weiteren Teilbereich (23) des nichtflüchtigen Speichers (20) weitere für die Verschlüsselung eingesetzte Daten gespeichert werden.

8. Funktionssteuereinrichtung (4) einer Nutzungsberechtigungskontrolleinrichtung,
**dadurch gekennzeichnet,**
**daß** die Funktionssteuereinrichtung (4) geeignet ist zum Vergleichen einer intern erzeugten verschlüsselten Nachricht (H(Y)) mit einer von einer Auswerteeinheit (2) der Nutzungsberechtigungskontrolleinrichtung erhaltenen verschlüsselten Nachricht (H(Y)) und zum Freigeben mindestens einer durch die Nutzungsberechtigungskontrolleinrichtung geschützten Funktion bei übereinstimmenden Nachrichten, und daß die Funktionssteuereinrichtung (4) einen Chip umfaßt für die Speicherung eines Secret Keys (17) zur Verwendung durch einen Verschlüsselungsalgorithmus (13) zum Erzeugen einer verschlüsselten Nachricht, wobei der Chip einen nichtflüchtigen Speicher umfaßt, der mindestens einen Teilbereich aufweist, in dem ein Secret Key (17) gespeichert ist, sowie einen mindestens einen Verschlüsselungsalgorithmus (13) realisierenden Hardwarebereich mit Zugriff zu dem mindestens einen Teilbereich des nichtflüchtigen Speichers mit einem Secret Key (17).

9. Funktionssteuereinrichtung (4) nach Anspruch 8,
**dadurch gekennzeichnet,**
**daß** der mindestens eine Teilbereich des nichtflüchtigen Speichers, in dem ein Secret Key (17) gespeichert ist, nicht lesbar ist.

10. Funktionssteuereinrichtung (4) nach Anspruch 8 oder 9,
**dadurch gekennzeichnet,**
**daß** der nichtflüchtige Speicher ein EEPROM, ein Flash-RAM oder ein FRAM ist.

11. Funktionssteuereinrichtung (4) nach einem der Ansprüche 8 bis 10,
**dadurch gekennzeichnet,**
**daß** der Inhalt des mindestens einen Teilbereichs des nichtflüchtigen Speichers, in dem ein Secret Key (17) gespeichert ist, nicht änderbar ist.

12. Funktionssteuereinrichtung (4) nach einem der Ansprüche 8 bis 10,
**dadurch gekennzeichnet,**
**daß** der Inhalt des mindestens einen Teilbereichs des nichtflüchtigen Speichers, in dem ein Secret Key (17) gespeichert ist, erneut beschreibbar ist.

13. Funktionssteuereinrichtung (4) nach Anspruch 12,
**dadurch gekennzeichnet,**
**daß** der Inhalt des mindestens einen Teilbereichs des nichtflüchtigen Speichers, in dem ein Secret Key (17) gespeichert ist, mit einem Paßwort gegen ein erneutes Überschreiben geschützt ist.

14. Funktionssteuereinrichtung (4) nach einem der Ansprüche 8 bis 13,
**dadurch gekennzeichnet,**
**daß** in einem weiteren Teilbereich des nichtflüchtigen Speichers weitere für die Verschlüsselung eingesetzte Daten gespeichert werden.

15. Wegfahrsperre eines Kraftfahrzeugs, die benutzerseitig eine Schlüsseleinrichtung (5) und fahrzeugseitig eine Antenne, eine Auswerteeinheit (2) und eine Antriebssteuereinheit (4) aufweist, wobei die Schlüsseleinrichtung (5) über eine Kommunikation über die Antenne durch die Auswerteeinheit (2) authentifizierbar ist und die Antriebssteuereinheit (4) von der Auswerteeinheit (2) benachrichtigt wird, daß antriebsrelevante Funktionen freigegeben werden können,
**dadurch gekennzeichnet,**
**daß** mindestens die Auswerteeinheit (2) einen Chip umfaßt für die Speicherung eines Secret Keys (15, 16) zur Verwendung durch einen Verschlüsselungsalgorithmus (11, 12, 24) zum Erzeugen einer verschlüsselten Nachricht, wobei der Chip einen nichtflüchtigen Speicher (20) umfaßt, der mindestens einen Teilbereich (21, 22) aufweist, in dem ein Secret Key (15, 16) gespeichert ist, sowie einen mindestens einen Verschlüsselungsalgorithmus (24) realisierenden Hardwarebereich mit Zugriff zu dem mindestens einen Teilbereich (21, 22) des nichtflüchtigen Speichers (20) mit einem Secret Key (15, 16).

16. Wegfahrsperre nach Anspruch 15,
**dadurch gekennzeichnet,**
**daß** der mindestens eine Teilbereich (21, 22) des nichtflüchtigen Speichers (20), in dem ein Secret Key (15, 16) gespeichert ist, nicht lesbar ist.

17. Wegfahrsperre nach Anspruch 15 oder 16,
**dadurch gekennzeichnet,**
**daß** der nichtflüchtige Speicher (20) ein EEPROM, ein Flash-RAM oder ein FRAM ist.

18. Wegfahrsperre nach einem der Ansprüche 15 bis 17,
**dadurch gekennzeichnet,**
**daß** der Inhalt des mindestens einen Teilbereichs (21, 22) des nichtflüchtigen Speichers (20), in dem ein Secret Key (15, 16) gespeichert ist, nicht änderbar ist.

19. Wegfahrsperre nach einem der Ansprüche 15 bis 17,
**dadurch gekennzeichnet,**
**daß** der Inhalt des mindestens einen Teilbereichs (21, 22) des nichtflüchtigen Speichers (20), in dem ein Secret Key (15, 16) gespeichert ist, erneut beschreibbar ist.

20. Wegfahrsperre nach Anspruch 19,
**dadurch gekennzeichnet,**
**daß** der Inhalt des mindestens einen Teilbereichs (21, 22) des nichtflüchtigen Speichers (20), in dem ein Secret Key (15, 16) gespeichert ist, mit einem Paßwort gegen ein erneutes Überschreiben geschützt ist.

21. Wegfahrsperre nach einem der Ansprüche 15 bis 20,
**dadurch gekennzeichnet,**
**daß** in einem weiteren Teilbereich (23) des nichtflüchtigen Speichers (20) weitere für die Verschlüsselung eingesetzte Daten gespeichert werden.

## Claims

1. Evaluation unit (2) of a use authorization control device for comparing an internally produced coded message (F(X)) with a coded message (F(X)) obtained from an encoding device (5),
**characterized in that**,
the evaluation unit (2) is further suited for producing and outputting a further coded message (H(Y)) to a function control device (4) and that the evaluation unit (2) includes a chip for storing a secret key (15, 16) for utilization by an encoding algorithm (11, 12, 24) for producing a coded message, wherein the chip includes a non-volatile memory (20), which has at least one subarea (21, 22), in which a secret key (15, 16) is stored, as well as a hardware area for realizing at least one encoding algorithm (24) with access to the at least one subarea (21, 22) of the non-volatile memory (20) with a secret key (15, 16).

2. Evaluation unit (2) according to claim 1,
**characterized in that** the at least one subarea (21, 22) of the non-volatile memory (20), in which a secret key (15, 16) is stored, is not readable.

3. Evaluation unit (2) according to claim 1 or 2,
**characterized in that** the non-volatile memory (20) is an EEPROM, a flash-RAM, or a FRAM.

4. Evaluation unit (2) according to one of claims 1 through 3, **characterized in that** the content of the at least one subarea (21, 22) of the non-volatile memory (20), in which a secret key (15, 16) is stored, is not changeable.

5. Evaluation unit (2) according to one of claims 1 through 3, **characterized in that** the content of the at least one subarea (21, 22) of the non-volatile memory (20), in which a secret key (15, 16) is stored, is rewritable.

6. Evaluation unit (2) according to claim 5,
**characterized in that** the content of the at least one subarea (21, 22) of the non-volatile memory (20), in which a secret key (15, 16) is stored, is protected with a password against a new overwriting.

7. Evaluation unit (2) according to one of the preceding claims, **characterized in that** in a further subarea (23) of the non-volatile memory (20), further data used for the encoding are stored.

8. Functional control device (4) of a use authorization control device,
**characterized in that**,
the functional control device (4) is suited for comparing an internally produced coded message (H(Y)) with a coded message (H(Y)) obtained from an evaluation unit (2) of the use authorization control device and for releasing at least one function protected by the use authorization control device with corresponding messages, and that the functional control device (4) includes a chip for storing a secret key (17) for utilization by an encoding algorithm (13) for producing a coded message, wherein the chip includes a non-volatile memory, which has at least one subarea, in which a secret key (17) is stored, as well as a hardware area for realizing at least one encoding algorithm (13) with access to the at least one subarea of the non-volatile memory with a secret key (17).

9. Functional control device (4) according to claim 8,
**characterized in that** the at least one subarea of the non-volatile memory, in which a secret key (17) is stored, is not readable.

10. Functional control device (4) according to claim 8 or 9, **characterized in that** the non-volatile memory is an EEPROM, a flash-RAM, or a FRAM.

11. Functional control device (4) according to one of claims 8 through 10, **characterized in that** the content of the at least one subarea of the non-volatile memory, in which a secret key (17) is stored, is not changeable.

12. Functional control device (4) according to one of claims 8 through 10, **characterized in that** the content of the at least one subarea of the non-volatile memory, in which a secret key (17) is stored, is rewritable.

13. Functional control device (4) according to claim 12,
**characterized in that** the at least one subarea of the non-volatile memory, in which a secret key (17) is stored, is protected with a password against a new overwriting.

14. Functional control device (4) according to one of claims 8 through 13, **characterized in that** in a further subarea of the non-volatile memory, further data used for the encoding are stored.

15. Anti-theft device of a motor vehicle, which, on the user side, has a coding device (5) and on the vehicle side, an antenna, an evaluation unit (2), and a drive control unit (4), wherein the coding device (5) can be authenticated via a communication over the antenna by the evaluation unit (2) and the drive control unit (4) is notified by the evaluation unit (2), that drive-relevant functions can be released,
**characterized in that**,
at least the valuation unit (2) includes a chip for storing a secret key (15, 16) for use by an encoding algorithm (11, 12, 24) for producing a coded message, wherein the chip includes a non-volatile memory (20), which has at least one subarea (21, 22), in which a secret key (15, 16) is stored, as well as a hardware area for realizing at least one encoding algorithm (24) with access to the at least one subarea (21, 22) of the non-volatile memory (20) with a secret key (15, 16).

16. Anti-theft device according to claim 15,
**characterized in that** the at least one subarea (21, 22) of the non-volatile memory (20), in which a secret key (15, 16) is stored, is not readable.

17. Anti-theft device according to claim 15 or 16,
**characterized in that** the non-volatile memory (20) is an EEPROM, a flash-RAM, or a FRAM.

18. Anti-theft device according to one of claims 15 through 17, **characterized in that** the content of the at least one subarea (21, 22) of the non-volatile memory (20), in which a secret key (15, 16) is stored, is not changeable.

19. Anti-theft device according to one of claims 15 through 17, **characterized in that** the content of the at least one subarea (21, 22) of the non-volatile memory (20), in which a secret key (15, 16) is stored, is rewritable.

20. Anti-theft device according to claim 19,
**characterized in that** the content of the at least one subarea (21, 22) of the non-volatile memory (20), in which a secret key (15, 16) is stored, is protected with a password against a new overwriting.

21. Anti-theft device according to one of claims 15 through 20, **characterized in that** in a further subarea (23) of the non-volatile memory (20), further data used for the encoding are stored.

## Revendications

1. Unité d'exploitation (2) d'un système de contrôle d'autorisation d'usage pour la comparaison d'un message codé (F(X)) généré en interne avec un message codé (F(X)) reçu d'un dispositif de codage (5),
**caractérisée en ce que**
l'unité d'exploitation (2) est en outre apte à générer et à émettre un autre message codé (H(Y)) vers un dispositif de contrôle fonctionnel (4) et que l'unité d'exploitation (2) comprend une puce pour le stockage d'un code secret (15, 16) destiné à être utilisé par un algorithme de codage (11, 12, 24) pour générer un message codé, la puce comprenant une mémoire non volatile (20) qui présente au moins un secteur partiel (21, 22) où est stocké un code secret, ainsi qu'au moins un secteur matériel réalisant au moins un algorithme de codage (24), ayant accès à l'au moins un secteur partiel (21, 22) de la mémoire non volatile (20) contenant un code secret (15, 16).

2. Unité d'exploitation (2) selon la revendication 1,
**caractérisée en ce que**
l'au moins un secteur partiel (21, 22) de la mémoire non volatile (20) où est stocké un code secret (15, 16) n'est pas lisible.

3. Unité d'exploitation (2) selon la revendication 1 ou 2, **caractérisée en ce que**
la mémoire non volatile (20) est une mémoire EEPROM, une mémoire vive flash RAM ou une mémoire FRAM.

4. Unité d'exploitation (2) selon l'une quelconque des revendications 1 à 3, **caractérisée en ce que**
le contenu de l'au moins un secteur partiel (21, 22) de la mémoire non volatile (20) où est stocké un code secret (15, 16) n'est pas modifiable.

5. Unité d'exploitation (2) selon l'une quelconque des revendications 1 à 3, **caractérisée en ce que**
le contenu de l'au moins un secteur partiel (21, 22) de la mémoire non volatile (20) où est stocké un code secret (15, 16) est réinscriptible.

6. Unité d'exploitation (2) selon la revendication 5,
**caractérisée en ce que**
le contenu de l'au moins un secteur partiel (21, 22) de la mémoire non volatile (20) où est stocké un code secret (15, 16) est protégé par un mot de passe contre une nouvelle surinscription.

7. Unité d'exploitation (2) selon l'une quelconque des revendications précédentes,
**caractérisée en ce que**,
dans un autre secteur partiel (23) de la mémoire non volatile (20), d'autres données utilisées pour le codage sont stockées.

8. Dispositif de commande fonctionnelle (4) d'un système de contrôle d'autorisation d'usage,
**caractérisé en ce que**
le dispositif de commande fonctionnelle (4) est apte à comparer un message codé généré en interne (H(Y)) à un message codé (H(Y)) reçu par une unité d'exploitation (2) du système de contrôle d'autorisation d'usage et à déclencher au moins une fonction protégée par le système de contrôle d'autorisation d'usage si les messages concordent et que le dispositif de commande fonctionnelle (4) comprend une puce pour le stockage d'un code secret (17) destiné à être utilisé par un algorithme de codage (13) pour générer un message codé, la puce comprenant une mémoire non volatile qui présente au moins un secteur partiel où est stocké un code secret (17), ainsi qu'un secteur matériel réalisant au moins un algorithme de codage (13), ayant accès à l'au moins un secteur partiel de la mémoire non volatile contenant un code secret (17).

9. Dispositif de commande fonctionnelle (4) selon la revendication 8,
**caractérisé en ce que**
l'au moins un secteur partiel de la mémoire non volatile où est stocké un code secret (17) n'est pas lisible.

10. Dispositif de commande fonctionnelle (4) selon la revendication 8 ou 9,
**caractérisé en ce que**
la mémoire non volatile est une mémoire EEPROM, une mémoire morte flash RAM ou une mémoire FRAM.

11. Dispositif de commande fonctionnelle (4) selon l'une quelconque des revendications 8 à 10,
**caractérisé en ce que**
le contenu de l'au moins un secteur partiel de la mémoire non volatile où est stocké un code secret (17) n'est pas modifiable.

12. Dispositif de commande fonctionnelle (4) selon l'une quelconque des revendications 8 à 10,
**caractérisé en ce que**
le contenu de l'au moins un secteur partiel de la mémoire non volatile où est stocké un code secret (17) est réinscriptible.

13. Dispositif de commande fonctionnelle (4) selon la revendication 12,
**caractérisé en ce que**
le contenu de l'au moins un secteur partiel de la mémoire non volatile où est stocké un code secret (17) est protégé par un mot de passe contre une surinscription.

14. Dispositif de commande fonctionnelle (4) selon l'une quelconque des revendications 8 à 13,
**caractérisé en ce que**,
dans un autre secteur partiel de la mémoire non volatile, d'autres données utilisées pour le codage sont stockées.

15. Système antidémarrage d'un véhicule automobile, qui présente du côté utilisateur un dispositif de codage (5) et du côté véhicule une antenne, une unité d'exploitation (2) et une unité de commande de propulsion (4), le dispositif de codage (5) étant authentifiable au moyen d'une communication par le biais de l'antenne par l'unité d'exploitation (2) et l'unité de commande de propulsion (4) étant avisée par l'unité d'exploitation (2) que les fonctions liées à la propulsion peuvent être déclenchées,
**caractérisé en ce que**
au moins l'unité d'exploitation (2) comprend une puce pour le stockage d'un code secret (15, 16) destiné à être utilisé par un algorithme de codage (11, 12, 24) pour générer un message codé, la puce comprenant une mémoire non volatile (20) qui présente au moins un secteur partiel (21, 22) où est stocké un code secret (15, 16), ainsi qu'un secteur matériel réalisant au moins un algorithme de codage (24), ayant accès à l'au moins un secteur partiel (21, 22) de la mémoire non volatile (20) contenant un code secret (15, 16).

16. Système antidémarrage selon la revendication 15,
**caractérisé en ce que**
l'au moins un secteur partiel (21, 22) de la mémoire non volatile (20) où est stocké un code secret (15, 16) n'est pas lisible.

17. Système antidémarrage selon la revendication 15 ou 16, **caractérisé en ce que**
la mémoire non volatile (20) est une mémoire EEPROM, une mémoire vive flash RAM ou une mémoire FRAM.

18. Système antidémarrage selon l'une quelconque des revendications 15 à 17,
**caractérisé en ce que**
le contenu de l'au moins un secteur partiel (21, 22) de la mémoire non volatile (20) où est stocké un code secret (15, 16) n'est pas modifiable.

19. Système antidémarrage selon l'une quelconque des revendications 15 à 17,
**caractérisé en ce que**
le contenu de l'au moins un secteur partiel (21, 22) de la mémoire non volatile (20) où est stocké un code secret (15, 16) est réinscriptible.

20. Système antidémarrage selon la revendication 19,
**caractérisé en ce que**
le contenu de l'au moins un secteur partiel (21, 22) de la mémoire non volatile (20) où est stocké un code secret (15, 16) est protégé par un mot de passe contre une surinscription.

21. Système antidémarrage selon l'une quelconque des revendications 15 à 20,
**caractérisé en ce que**
dans un autre secteur partiel (23) de la mémoire non volatile (20), d'autres données utilisées pour le codage sont stockées.
